# EUROPÄISCHE PATENTSCHRIFT

(11) **EP 3 083 062 B1**
(45) Veröffentlichungstag und Bekanntmachung des Hinweises auf die Patenterteilung: **18.07.2018**
(21) Anmeldenummer: 14815280.4
(22) Anmeldetag: 09.12.2014
(51) Int. Cl.: B02C 4/30

(54) **VERFAHREN ZUR EINARBEITUNG VON VERTIEFUNGEN IN EINER WALZENROLLE**
METHOD FOR PROVIDING RECESSES IN A ROLLER
PROCÉDÉ DE FABRICATION DE CAVITÉS DANS UN ROULEAU

(30) Priorität: 20.12.2013 DE 102013021764; 18.02.2014 DE 102014002366
(43) Veröffentlichungstag der Anmeldung: 26.10.2016
(73) Patentinhaber: KHD Humboldt Wedag GmbH, 51067 Köln (DE)
(72) Erfinder: KOPP, Günther, 51107 Köln (DE); BRENDLER, Dieter, 51465 Bergisch Gladbach (DE)
(86) Internationale Anmeldenummer: PCT/EP2014/076966
(87) Internationale Veröffentlichungsnummer: WO 2015/091086

(56) Entgegenhaltungen:
- EP-A2- 0 563 564
- DE-A1- 3 915 320
- DE-B3-102010 061 309

## Beschreibung

Die Erfindung betrifft ein Verfahren zur Einarbeitung von Vertiefungen in die Oberfläche einer Walzenrolle für eine Walzenpresse.

Zur Zerkleinerung von körnigem und sprödem Mahlgut ist es bekannt, das Mahlgut statt - wie herkömmlich- durch scherende Beanspruchung durch alleinige Anwendung von hohem Druck in einem Walzenspalt energetisch wirtschaftlich zu zerkleinern. Diese Art der Zerkleinerung weist neben dem energetisch günstigen Einsatz auch noch den Vorteil einer erhöhten Standzeit der zur Erzeugung des Drucks im Walzenspalt eingesetzten Walzen auf. Die Hochdruckzerkleinerung wurde erstmals von Schönert et al. in der deutschen Offenlegungsschrift DE 27 08 053 erstmals beschrieben.

Bei der Zerkleinerung von Gestein und sehr hartem und abrasivem Klinker ist der Standzeit einer Walze einer Rollenpresse jedoch eine vorbestimmte Grenze gesetzt, die bedingt ist durch den starken Abrieb durch das zu zerkleinernde Material. Bei der Zerkleinerung im Walzenspalt ist es daneben wichtig, dass das Mahlgut gleichmäßig und kontrolliert den Walzenspalt passiert. Für einen geringeren Abrieb und für einen verbesserten und gleichmäßigen Einzug des Mahlguts in den Walzenspalt der Walzenpresse ist man daher dazu übergegangen, die gegenläufigen Walzen der Rollenpresse zu profilieren. Im einfachsten Fall handelt es sich um sich in axialer Richtung erstreckende Längsnuten auf der Oberfläche der Walze, in denen sich verdichtetes Mahlgut zur Ausbildung einer autogenen Verschleißschutzschicht ansammelt und die zu einem vergleichsmäßigten Materialeinzug führt, selbst dann, wenn das Mahlgut eine breite oder im zeitlichen Mittel variierende Korngrößenverteilung aufweist. Eine so gestaltete Walze ist in der deutschen Offenlegungsschrift DE 10 2010 024 221 A1 offenbart.

Der Aufbau einer Walze für eine Rollenpresse besteht typischerweise aus einem Walzengrundkörper mit daran angeordneten Wellen. An den Grundkörper werden keine besonderen Anforderungen in Bezug auf Materialeigenschaften gestellt. Auf diesen Grundkörper wird sodann eine Bandage mit der eingangs erwähnten Beschaffenheit der Oberfläche aufgeschrumpft oder mit sonstigen, dem Fachmann bekannten Mitteln befestigt. Diese Bandage ist ein im Wesentlichen zylindrischer Hohlkörper, der auf seiner Innenseite größenkompatibel mit dem Walzengrundkörper ist und auf seiner Außenseite trägt die Bandage eine meist nachträglich aufgebrachte Profilierung. Die Profilierung wird in der Regel entweder durch spanende Bearbeitung eingebracht oder durch Auftragsschweißungen werden Schweißraupen auf die Oberfläche eingebracht, durch welche zwischen den Schweißraupen die das Profil der Bandage erzeugenden Nuten entstehen. Die Wahl der Bearbeitung zur Profilierung hängt im Wesentlichen von den Materialeigenschaften der Oberfläche der Walzenrolle oder der Bandage für die Walzenrolle ab. Besonders harte Materialien, wie kohlenstoffhaltige Stähle sind in der Regel temperaturempfindlich. Gussstahl, wie ADI (Austempered Ductile Iron), welches erst mit starker Beanspruchung sein Gefüge ändert und dadurch erst sehr hart wird, kann sich schon bei Temperaturen um die 400°C in eine Phase umwandeln, die nicht mehr die gewünschten Materialeigenschaften aufweist und daher in der Regel sehr weich und verschleißanfällig wird. Des Weiteren sind Gussstähle schwer zu schweißen, so dass eine Schweißraupe nicht oder nur mit sehr viel Erfahrung auf die Oberfläche eingebracht werden kann. Bei der spanenden Bearbeitung kann je nach Materialeigenschaften das Material an der Oberfläche ausreißen, ausbrechen oder beim Zerspanen kann sich das Material in den nicht abzutragenden Regionen unerwünscht erwärmen, so dass das Material dort, wo es nicht abgetragen werden soll, im Gebrauch stark abnutzt. Eine Walze aus ADI mit durch Nutenschleifen eingearbeiteten Vertiefungen wird in der deutschen Offenlegungsschrift DE 10 2004 043 562 A1 offenbart.

Aufgabe der Erfindung ist es deshalb, ein Verfahren zur Einarbeitung von Vertiefungen in eine Walzenrolle vorzuschlagen, welches einfach durchgeführt werden kann.

Die der Erfindung zu Grunde liegende Aufgabe wird durch Verfahren gemäß Ansprüchen 1 und 5 gelöst. Statt das Oberflächenmaterial zur Einarbeitung einer Profilierung abzutragen, Schweißraupen aufzubringen oder anders formgebend zu bearbeiten, wird nach dem Geist der Erfindung vorgeschlagen, die Oberfläche der zu bearbeitenden Walzenrolle thermisch zu behandeln, und zwar an den Stellen, an denen das Material später fehlen soll. Das Material der Oberfläche wird nicht abgetragen, sondern es verbleibt an Ort und Stelle, so dass dieser erste Verarbeitungsschritt die Walzenrolle noch nicht in einen arbeitsfähigen Zustand bringt. Erst eine initiale Nutzung der Walzenrolle in einer Hochdruck-Walzenpresse unter Einsatz von hohem Druck und abrasivem Material führt dazu, dass an den Stellen, an denen Vertiefungen in der Oberfläche der Walzenrolle vorhanden sein sollen, das Material überraschend gleichmäßig ausbricht oder verschleißt. Es ist also vorgesehen, dass die thermische Behandlung des Oberflächenmaterials der Walzenrolle das Gefüge ändert und dabei dem Material der Oberfläche die sonst erwünschte Härte und Abrasionsfestigkeit nimmt. Bei Gussstählen reicht zur thermischen Behandlung eine Temperatur von deutlich unter 1.000°C, so dass eine vorbeiziehende Schweißflamme, die das Material streifenförmig erhitzt, eine Gefügeänderung bis in eine Tiefe von bis zu 10 mm in das Material einbringt.

Bei einer ersten Inbetriebnahme der Walzenrolle, die zur Verbesserung des Einzugsverhaltens und zur Ausbildung einer autogenen Verschleißschicht eine Profilierung aufweisen soll, ist es notwendig, die Walzenrolle mit dem schlechteren Einzugsverhalten in Betrieb zu nehmen. Dabei sollte die Materialaufgabe kontrolliert werden, so dass sich keine Schüttung von Frischgut auf dem Walzenspalt der Hochdruck-Walzenpresse ausbildet, unter dem die Walzenrollen unter her rotieren und kein Material einziehen.

Um die thermische Behandlung durchzuführen, kann es nach der Erfindung vorgesehen sein, einen Laser, eine Schweißflamme, eine Induktionserhitzung oder Reibung einzusetzen. Bei allen Arten erwärmt sich das Oberflächenmaterial so stark, dass das harte oder durch Beanspruchung hart werdende Gefüge weich und abrasionsempfindlich wird.

Zur Durchführung des Verfahrens kann es vorgesehen sein, dass die Walzenrolle unbehandelt und mit zylindrischer, glatter Oberfläche in die Hochdruck-Walzenpresse eingebaut wird und die nach thermischer Behandlung veränderten Materialschichten der Rollenwalze durch Erstingebrauchnahme verschlissen werden. Es ist also vorgesehen, die unbehandelte Walzenrolle in der Hochdruck-Walzenpresse thermisch zu behandeln und der nach thermischer Behandlung äußerlich nahezu unverändert aussehenden Walzenrolle bei erster Inbetriebnahme durch gezielten Verschleiß eine erwünschte Profilierung zu verleihen.

Für eine vorteilhafte Wirkung sollten Profile mit Vertiefungen quer zur Rotationsrichtung, also im Wesentlichen achsparallel eingebracht werden. Das thermische Behandeln der Walzenrolle geschieht in Form der Erwärmung von achsparallelen Streifen, in einem regelmäßigen Gitter angeordneten Polygonen oder Kreisen. Um Streifen zu erwärmen, ist es nicht notwendig, den gesamten Streifen gleichmäßig zu erhitzen, sondern es kann auch vorgesehen sein, eine punktförmige Wärmequelle, wie Schweißflamme, Laser oder Induktionserhitzer, durch Vorbeiführen langsam einen Streifen auf der Oberfläche ausführen zu lassen. Bei der erwünschten Ausbildung von Polygonen oder kreisförmigen Flächen kann die Fläche ähnlich wie beim Zeichnen mit einem Stift durch die Wärmequelle ausgefüllt werden.

Das erfindungsgemäße Verfahren hat besondere Vorteile für die Wiederaufarbeitung von bereits verschlissenen Walzenrollen für eine Hochdruck-Rollenpresse zur Zerkleinerung von sprödem Mahlgut und beim Einsatz von besonders schwierigen Oberflächenmaterialien als Material für eine Walzenrolle, die sich nur unter hohem apparativen oder kenntnisintensiven Aufwand mit Auftragsschweißungen versehen lassen. Verschlissene Walzen mit einer ungleichmäßigen oder nicht perfekt zylindrischen Oberfläche müssen für die Nachbehandlung nicht erst abgetragen werden, sondern die ungleichmäßige, gegebenenfalls sogar leicht hügelige Oberfläche kann direkt behandelt werden, wobei die Wärmequelle, Schweißbrenner, Laserstrahl oder Induktionserwärmer, nur in die Nähe der Oberfläche gebracht, nicht aber wie ein zerspanendes Werkzeug, direkt auf die Oberfläche aufgesetzt werden muss.

In einer besonderen Ausführungsform der Erfindung wird die thermische Behandlung der Oberfläche durch eine Auftragsschweißung erreicht, wobei die Auftragsschweißung, anders als bekannte Auftragsschweißungen mit sehr hartem Material, aus einem Material besteht, das deutlich weicher ist als die Oberfläche der zu behandelnden Walzenrolle. Erst im Anfangsbetrieb würde sich das weiche Material schnell abtragen und die unter der Auftragsschweißung veränderte Oberfläche der Walzenrolle würde ebenfalls sehr bald Vertiefungen ausbilden. Überraschenderweise hat sich gezeigt, dass bei dieser Art der thermischen Behandlung eine Rissbildung in den Ufern der Vertiefungen ausbleiben.

## Patentansprüche

1. Verfahren zur Einarbeitung von Vertiefungen in die Oberfläche einer Walzenrolle für eine Walzenpresse durch
thermisches Behandeln einer zylindrischen Walzenoberfläche, wobei die Walzenoberfläche im Bereich der erwünschten Vertiefungen so stark erwärmt wird bis sich die Materialeigenschaften der Walzenoberfläche in Bezug auf die Härte des Walzenmaterials dauerhaft, das heißt auch nach Abkühlung, verändern,
wobei nach thermischer Behandlung der äußerlich nahezu unverändert aussehenden Walzenrolle dieser bei erster Inbetriebnahme durch gezielten Verschleiß eine erwünschte Profilierung verliehen wird.

2. Verfahren nach Anspruch 1,
**gekennzeichnet durch**
Schleißen der Walzenoberfläche durch abrasives Material, welches unter Hochdruckbehandlung auf der Walzenoberfläche zerkleinert wird.

3. Verfahren nach einem der Ansprüche 1 oder 2,
**gekennzeichnet durch**
thermisches Behandeln durch Erwärmen mittels Laser, Schweißflamme, Induktionserhitzung oder Reibung,
oder durch Aufbringen einer Auftragsschweißung im Bereich der erwünschten Vertiefung aus einem Material, das weicher ist als das Material der Oberfläche der Walzenrolle.

4. Verfahren nach einem der Ansprüche 1 bis 3,
**gekennzeichnet durch**
thermisches Behandeln der Walzenrolle in Form von achsparallelen Streifen, in einem regelmäßigen Gitter angeordneten Polygonen oder Kreisen.

5. Verfahren zum Aufarbeiten einer verschlissenen Walzenrolle
**gekennzeichnet durch**
thermisches Behandeln einer zylindrischen Walzenoberfläche, wobei die Walzenoberfläche im Bereich der erwünschten Vertiefungen so stark erwärmt wird bis sich die Materialeigenschaften der Walzenoberfläche in Bezug auf die Härte des Walzenmaterials dauerhaft, das heißt auch nach Abkühlung, verändern.

## Claims

1. Method for introducing recesses into the surface of a rolling roller for a rolling press by
thermal treatment of a cylindrical roller surface, wherein the roller surface is heated in the region of the desired recesses until the material properties of the roller surface change permanently, i.e. even after cooling, with respect to the hardness of the roller material,
wherein the rolling roller, which has a virtually unchanged appearance after thermal treatment, is given desired profiling by targeted wear when it is put into operation for the first time.

2. Method according to Claim 1,
**characterized by**
closing the roller surface by way of abrasive material which is comminuted under high-pressure treatment on the roller surface.

3. Method according to either of Claims 1 and 2,
**characterized by**
thermal treatment by heating using a laser, welding torch, induction heating or friction,
or by application of a deposition weld in the region of the desired recess, said deposition weld being made of a material which is softer than the material of the surface of the rolling roller.

4. Method according to one of Claims 1 to 3,
**characterized by**
thermal treatment of the rolling roller in the form of axially parallel stripes, polygons arranged in a regular grid, or circles.

5. Method for refurbishing a worn rolling roller,
**characterized by**
thermal treatment of a cylindrical roller surface, wherein the roller surface is heated in the region of the desired recesses until the material properties of the roller surface change permanently, i.e. even after cooling, with respect to the hardness of the roller material.

## Revendications

1. Procédé de fabrication de cavités dans la surface d'un rouleau pour une presse à rouleaux, par
traitement thermique d'une surface de rouleau cylindrique, dans lequel on chauffe la surface du rouleau dans la région des cavités désirées à un point tel que les propriétés du matériau de la surface du rouleau changent de façon durable, c'est-à-dire aussi après le refroidissement, en ce qui concerne la dureté du matériau du rouleau,
dans lequel après le traitement thermique du rouleau d'apparence presqu'inchangée extérieurement on lui confère un profilage désiré lors de la première mise en service par une abrasion appropriée.

2. Procédé selon la revendication 1, **caractérisé par** l'abrasion de la surface du rouleau au moyen d'un matériau abrasif, que l'on broie sur la surface du rouleau par un traitement à haute pression.

3. Procédé selon une des revendications 1 ou 2, **caractérisé par**
un traitement thermique par chauffage au moyen d'un laser, d'une flamme de soudage, par chauffage par induction ou par friction,
ou par le dépôt d'une soudure de rechargement dans la région de la cavité désirée en un matériau, qui est plus doux que le matériau de la surface du rouleau.

4. Procédé selon l'une quelconque des revendications 1 à 3, **caractérisé par** le traitement thermique du rouleau sous la forme de bandes parallèles à l'axe, de polygones ou de cercles disposés selon une grille régulière.

5. Procédé d'usinage d'un rouleau abrasé, **caractérisé par** le traitement thermique d'une surface de rouleau cylindrique, dans lequel on chauffe la surface du rouleau dans la région des cavités désirées à un point tel que les propriétés du matériau de la surface du rouleau changent de façon durable, c'est-à-dire aussi après le refroidissement, en ce qui concerne la dureté du matériau du rouleau.
